Europäisches Patentamt

European Patent Office

Office européen des brevets

(19)

(11) Publication number: **0 201 639**

A1

(12) **EUROPEAN PATENT APPLICATION**

(21) Application number: **85303424.7**

(22) Date of filing: **15.05.85**

(51) Int. Cl.⁴: **B 62 M 1/04**

(43) Date of publication of application:
**20.11.86 Bulletin 86/47**

(84) Designated Contracting States:
**AT BE CH DE FR GB IT LI LU NL SE**

(71) Applicant: **Wen, Maz**
**No. 68, Alley 28, Lane 66, Pi-Hwa Street**
**San Chung City(TW)**

(72) Inventor: **Wen, Maz**
**No. 68, Alley 28, Lane 66, Pi-Hwa Street**
**San Chung City(TW)**

(74) Representative: **Alexander, Thomas Bruce et al,**
**Boult, Wade & Tennant 27 Furnival Street**
**London EC4A 1PQ(GB)**

(54) **Automatic speed variating means for bicycle.**

(57) An automatic speed variating means for bicycle includes a pedal (11) having a driving rod (14), a speed controller (4) having a magnetic actuator (46) driven by the bicycle wheel and a driving chain (3) driven by the driving rod (14) wherein the depression of the pedal (11) may drive the chain (3) for normal bicycle running and the faster bicycle running may operate the magnetic actuator (46) to exert a greater torque to automatically adjust the speed controller (4) for faster speed variation.

FIG. 1

Croydon Printing Company Ltd.

# AUTOMATIC SPEED VARIATING MEANS FOR BICYCLE

Whenever variating the driving speed of a bicycle provided with conventional speed variating means, it takes much time to establish a new speed for the bicyle. It is also difficult to modify the conventional speed variating means to be automatic due to its fixed structure of speed variating mechanism.

The present inventor has found the defects of conventional speed variating means of bicycle and invented the present automatic speed variating means for bicycle.

According to the present invention a speed variating means for a bicycle includes a reciprocatable actuating means arranged for tensioning a driving chain by lateral deflection thereof, the chain being fixed in position at one end and wherein the resulting stroke of the driving chain is variable by variation of the position of the fixed and of the chain.

The present invention further provides an automatic speed variating means for bicycle comprising an actuating means, a speed adjusting means and a driving chain wherein the speed adjusting means can be actuated automatically or manually to variate the driving speed of a bicycle.

--2--

Figure 1 is a perspective drawing of the present invention.

Figure 2 is an illustration of the actuating means of the present invention.

Figure 3 is an illustration of the stroke adjusting means of the present invention.

Figure 4 is an illustration of the speed controller of the present invention.

Figure 5 is a partial illustration showing the speed adjustment operation of the present invention.

Figure 6 shows the principle of the present invention.

Figure 7 shows the principle for stabilizing the stroke adjusting means of the present inveniton.

Figure 8 is a perspective drawing of another preferred embodiment of the present invention.

Figure 9 is an illustration showing the actuating means of the present invention as shown in Figure 8.

Figure 10 is an illustration showing the speed adjusting means of the present invention as shown in Figure 8.

Figure 11 shows the operation principle of the present invention of Figure 8 in a lower speed.

Figure 12 shows the operation of the present invention of Figure 8 at a higher speed.

Figure 13 is a perspective drawing of still another preferred embodiment of the present invention.

Figure 14 shows the actuating means of still another preferred embodiment of the present invention.

Figure 15 shows partial speed adjusting means of still another embodiment of the present invention.

Figure 16 shows the operation of the present invention as shown in Figure 13 when driven at a lower speed.

Figure 17 shows the operation of Figure 13 at a higher speed.

Figure 18 is an illustration shows further preferred embodiment of the present invention.

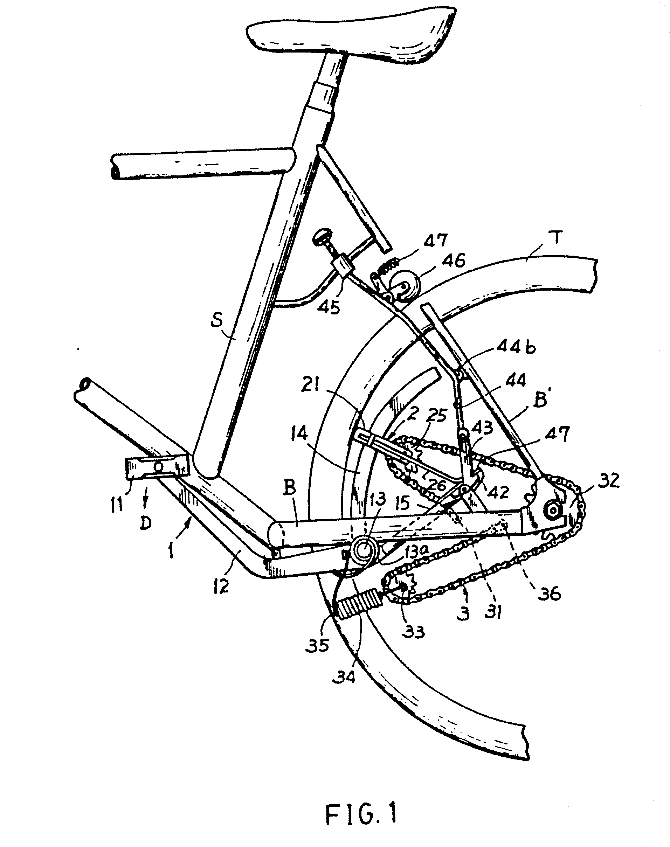

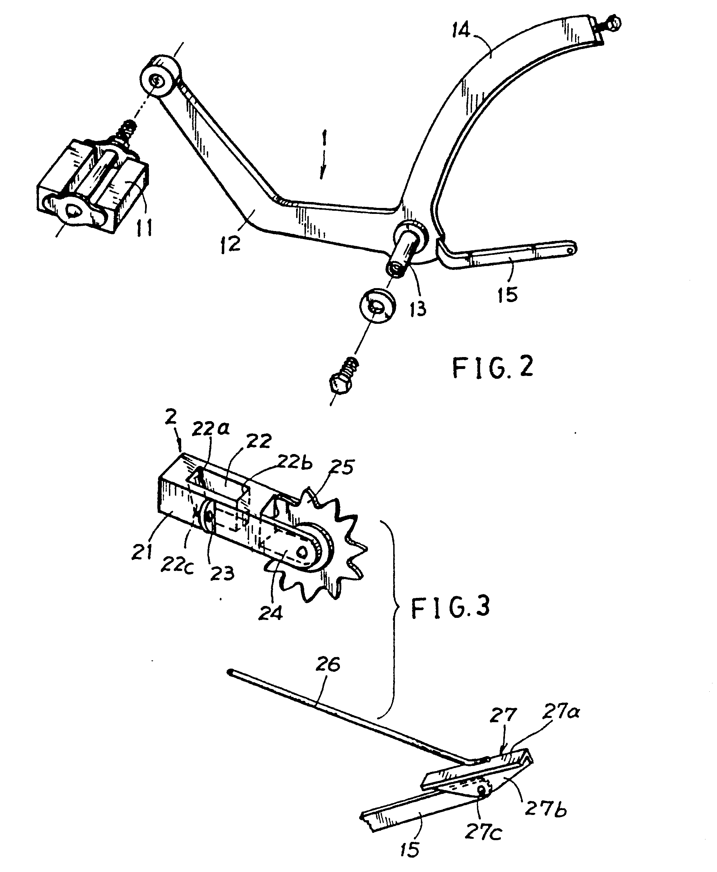

As shown in Figures 1-7, the present invention comprises: an actuating means 1, a stroke adjusting means 2, a driving chain 3 and a speed controller 4.

Actuating means 1 comprises a pedal 11, a pedal rod 12, a pivot 13 pivoted in a bush 13a connected on the bottom fork B of a bicycle, an arcuated driving plate 14 extending from pivot 13 and forming an angle with pedal rod 12, and a lower rod 15 connecting the stroke adjusting means 2. Arcuated driving plate 14 has a curvature for the smooth infinitesimal adjustment of stroke adjusting means 2.

Stroke adjusting means 2 comprises a sliding block 21 formed with a trapezoid hole 22, a side lug 23 having a hole for inserting a link 26, a bracket 24, a chain wheel 25 pivotedly fixed on bracket 24, a link 26 connected with a bottom striker 27. Bottom striker 27 is formed with two extensions 27a, 27b, both forming a bending angle therebetween. Trapezoid hole 22 is formed with an upper slope surface

--4--

between edge 22a and edge 22c and a lower flat surface 22b. One end
31 of driving chain 3 is fixed on bottom fork B.

The chain 3 has its one end 31 fixed on bottom fork B and has its
remaining portion engaged with chain wheel 25, chain wheel 32 formed
on the center of bicycle wheel T, chain wheel 33 and has its final end
36 fixed on bottom fork B. Chain wheel 33 is connected with a restored
spring 34 which is connected to bush 13a by a bracket 35.

Speed controller 4 comprises a lower bracket 41 fixed on bottom
fork B, a striker trimmer 42 pivotedly fixed on bracket 41 and formed
with two extensions 42a for receiving striker 27, a central rod 43
extending from trimmer 42, a biasing link 44 of which on end is formed
as a hook 44a inserted into a lengthy hole 43a of central rod 43 and
the uppermost end is formed as a handle 45 for manual speed adjustment
and a pivot 44b is centrally connected to the upper fork B' of bottom
fork B and a magnetic actuator 46 which is pivotedly connected onto
link 44 and connected with a restored spring 47 secured to upper fork B'.
Magnetic actuator 46 comprises a magnetic rotor core 46b and an outer
stator collar 46a.

When driving the bicycle of the present invention, the pedal 11
is depressed to allow the driving rod 14 pulling the driving chain 3
3 in direction D so that the chain wheel 32 will be rotated to drive
the bicycle. When releasing the depression of pedal, the restored
spring 34 will retract the driving chain 3 for next driving operation.
For manual speed variating of the present invention, the handle 45

--5--

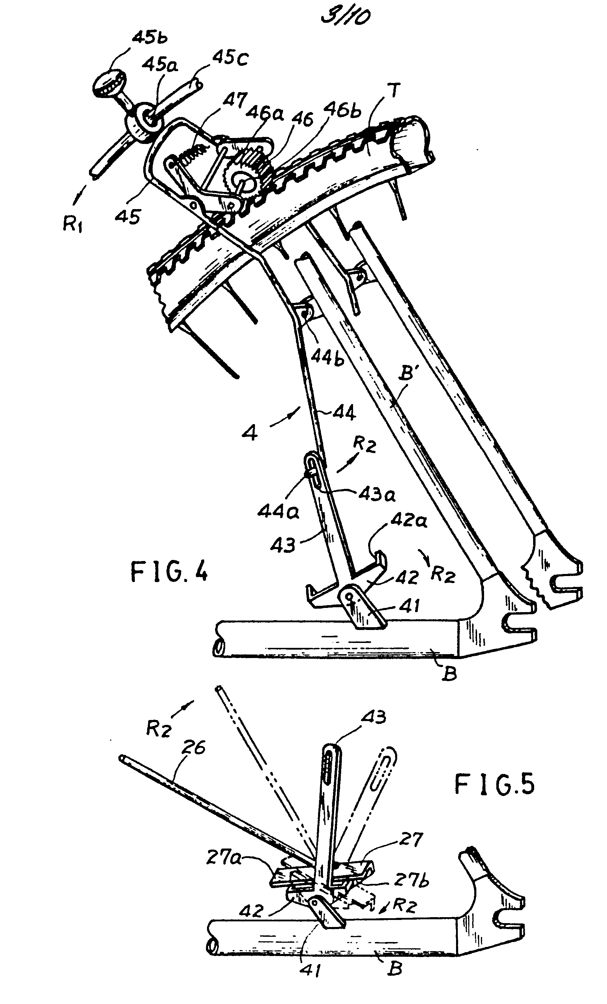

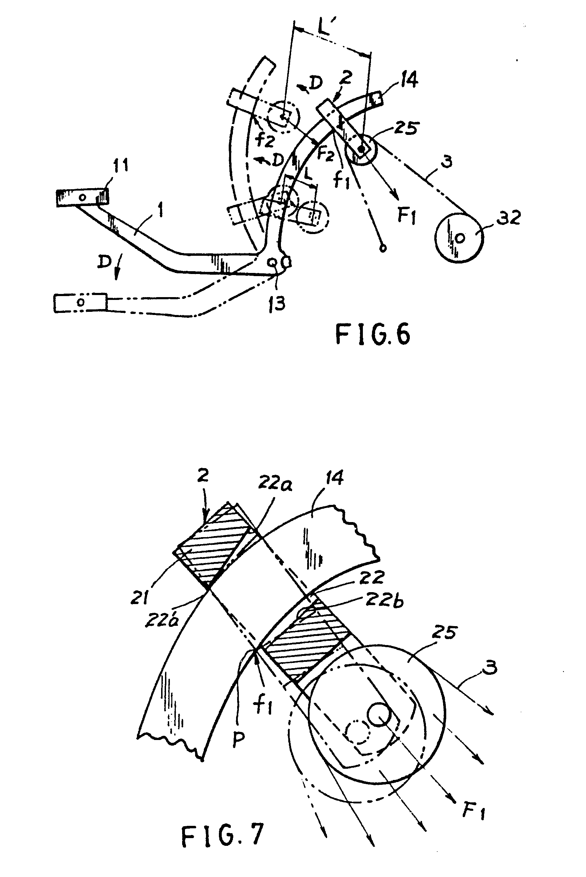

of speed controller 4 can be pulled in direction R1 as Figure 4 shown to biase rod 43 in direction R2 so as to rotate the striker trimmer 42 clockwise. After operating the actuating means 1, the striker 27 of stroke adjusting means 2 will backwards ride trimmer 42 at a new position as dotted line shown in Figure 5 and the link 26 will raise the sliding block 21 to a higher position. The higher position the block 21 is set, the faster speed of bicycle will be adjusted. This principle is shown in Figure 6 in that L' at the higher position will run longer stroke than the lower one L so as to exert a higher speed.

As shown in Figure 7, the tension caused by spring 34 will exert a force F1 which, however, will act on the arcuated plate 14 at edge 22c so as to biase the sliding block 21 to the position as dotted line shown, the lower edge at point P will exert a counter force f1 to pressurize on arcuated plate 14 so as to prevent from slipping down the block 21 of the present invention. When depressing the pedal 11 to move the plate 14 in direction D, the force F1 will be increased as bigger tension existing on chain 3 to become greater force F2 which in turn, forms a greater counter force f2 to further prevent from slipping down of sliding block 21.

The present invention can be provided as dual combination on both sides of the bicycle so that either single side can be operated or both sides be alternatively operated at the same time.

The present invention can be actuated automatically. If the running speed is getting higher and higher, the magnetic actuator 46 will be rotated faster to produce magnetic force to push link 44 in direction R1 so as to adjust the stroke adjusting means 2 for a higher speed. The spring 47 is provided to pressurize the magnetic actuator 46 on the wheel tire T and to tension the link 44 for normal operation.

In manual adjustment of the present invention, a sliding collar 45a with a stopping screw 45b is provided to slide along an arcuated guide 45c for variable speed adjustment.

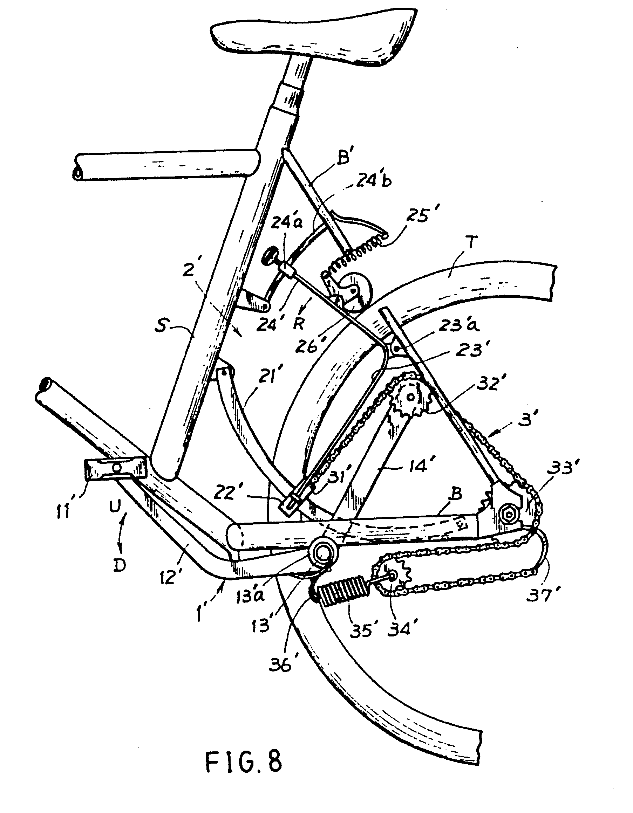

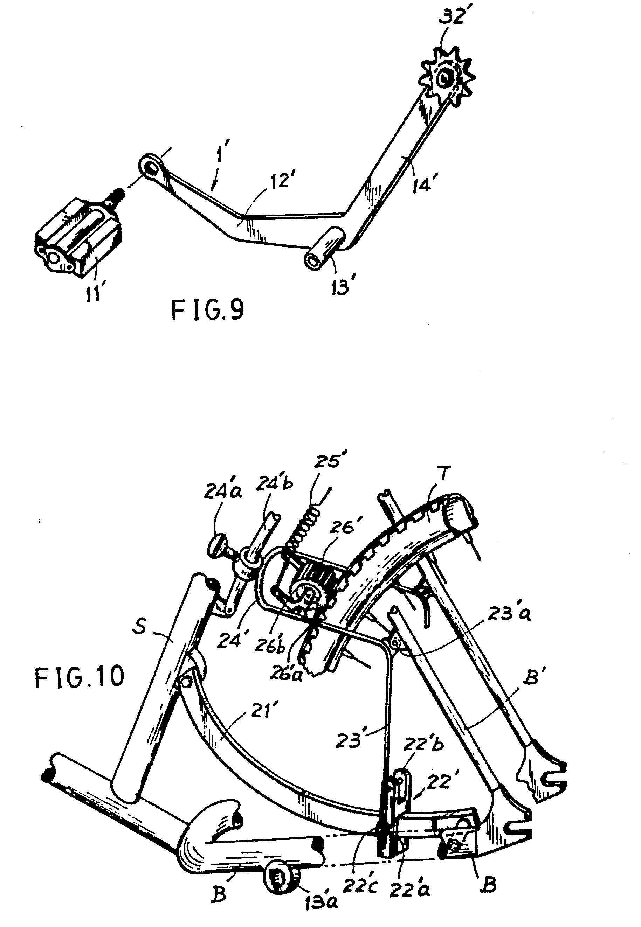

As shown in Figures 8 through 12, another preferred embodiment of the present invention comprises: an actuating means 1', a speed adjusting means 2' and a driving chain 3'.

Actuating means 1' comprises a pedal 11', a pedal rod 12' having pivot 13' fixed in a bush 13'a on bottom fork B and a driving rod 14' which forms an angle with the rod 12'. A chain wheel 32' is rotatably formed atop on the driving rod 14'.

Speed adjusting means 2' comprises an arcuated plate 21' fixed between the seat tube S and the bottom fork B of a bicycle, a controlling link 23', a sliding block 22' lowerly connected to controlling link 23', a handle 24' upperly formed on link 23', a restored spring 25' fixed to the upper fork B' to restore the speed adjusting means 2' for normal running and magnetic actuator 26' fixed on the upper portion of link 23'. Sliding block 22' is formed with a hole 22a' for jacketing block 22' into arcuated plate 21'. A bracket 22b' of block 22' is provided to fix one end 31' of driving chain 3'.

A side lug 22'c of block 22' having a hole is provided for the insertion of link 23'. Link 23' is centrally and pivotedly fixed on the upper fork B' of a bicycle by a pivot 23'a. The magnetic actuator 26' is pressurized on bicycle wheel T as restored by spring 25'. Magnetic actuator 26' comprises a rotator core 26'a and a stator collar 26'b. Briefly, the magnetic actuator 26' operates by rotating the stator collar about the rotor core. The rotor core would rotate slightly compared to the faster rotating collar due to the magnetic attraction between the magnetic core and the magnetic collar.

Driving chain 3' has its one end 31' fixed on block 22' and has its remaining portion engaged with chain wheel 32' rotatably fixed atop on driving rod 14', a chain wheel 33' formed on the center of bicycle wheel T, a chain wheel 34' which is connected with a restored spring 35' fixed on bottom fork B by a bracket 36', and has its final end 37' fixed on bottom fork B.

Handle 24' is adjustably moved along an arcuated guide 24'b and can be stopped by a stopping screw 24'a for manual speed adjustment of the invention. For automatic speed variating, the magnetic actuator 26' can be fast rotated if the driving speed is getting higher to exert a greater torque to bias the link 23' in direction R to lower block 22' for faster speed adjustment.

The structure of chain wheel 33' is designed as usual sprocket of a conventional bicycle. When driving the bicycle of the present invention, the pedal 11' is depressed to pull the driving chain 3' so that the chain wheel 33' will be rotated to drive the bicycle. When releasing the depression of pedal, the restored spring 35' will retract the driving chain 3' for next driving operation. The invention changes the conventional way for driving a bicycle by treadling the pedal and rotating the chain sprocket to the present way by depressing the pedal 11' to pull chain 3' to move bicycle forwards and by releasing pedal 11' to reverse the driving chain for next moving operation. Such a modification of pedal movement is especially designed for the speed variation of the present invention.

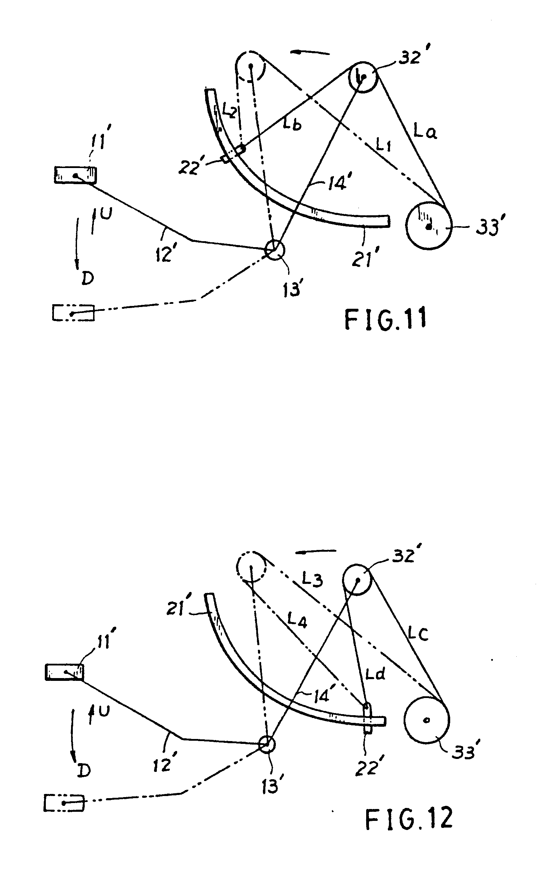

When changing speed of the present invention by adjusting block 22' downwards from Figure 11 to Figure 12, the moving stroke of driving chain 3' in Figure 11 is $(L1+L2) - (La + Lb)$ and the moving stroke in Figure 12 is $(L3 + L4) - (Lc + Ld)$ by depressing pedal 11' in direction D. Because L1 equals L3 and La + Lb equals Lc + Ld (as hereinafter explained) and L4 is greater than L2, the speed in Figure 12 is greater than that in Figure 11 so that the lower the sliding block 22' is positioned on arcuated plate 21', the faster speed of the bicycle will be.

When designing the arcuated plate 21' of the present invention, the length of driving chain 3' among block 22', chain wheel 32' and chain wheel 33' during moving the block 22' should be always the same. Hence, the length of La + Lb should be equal to the length of Lc + Ld.

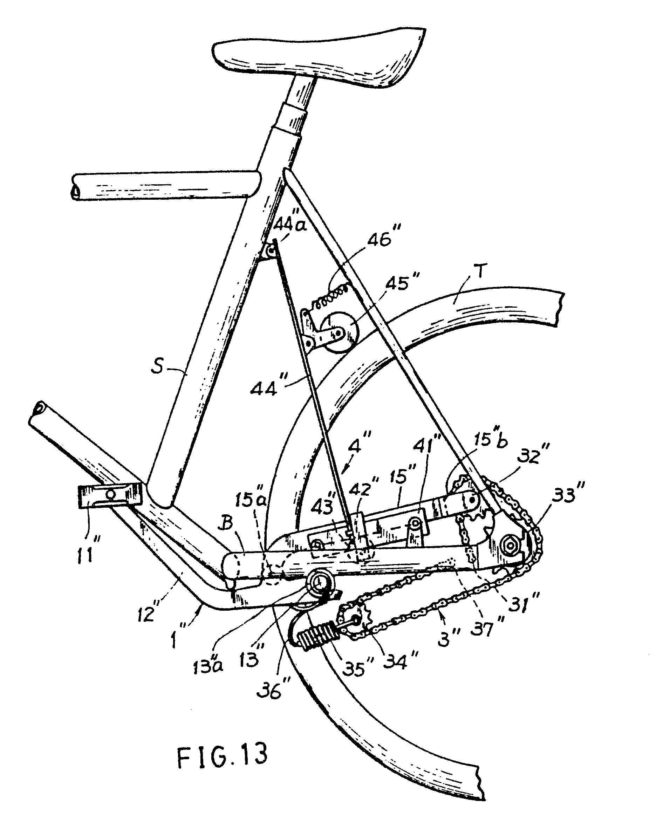

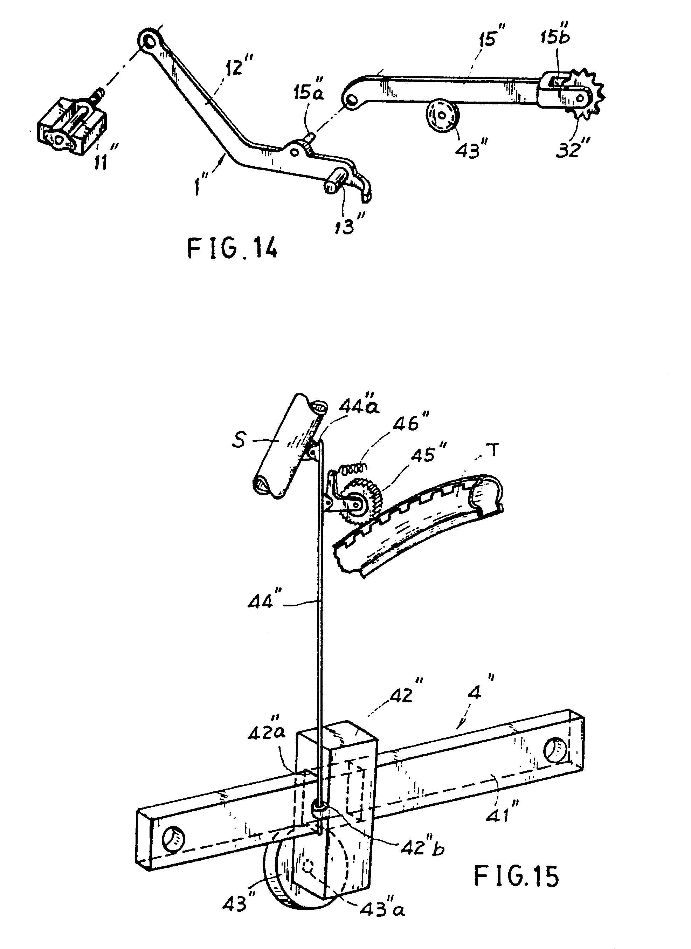

Still another preferred embodiment of the present invention is shown in Figures 13 through 17 which comprises an actuating means 1", a driving chain 3" and a speed controller 4".

Actuating means 1" comprises a pedal 11", a pedal rod 12" terminated by a rear pivot 13" pivotedly fixed in a bush 13"a and a driving rod 15" pivotedly formed on pedal rod 12" by a front pivot 15"a positioned beyond the rear pivot 13"a. Driving rod 15" is formed with a bracket 15"b for rotatably fixing a chain wheel 32" on the bracket 15"b.

Driving chain 3" has its one end 31" fixed on the bottom fork B" and has its remaining portion engaged with a chain wheel 32" rotatably fixed atop on driving rod 15", a chain wheel 33" formed on the center of bicycle wheel T, a chain wheel 34" which is connected with a restored spring 35" fixed on bottom fork by a bracket 36", and has its another end 37" fixed onto bottom fork.

Speed controller 4" comprises a fulcrum adjusting plate 41", a sliding block 42" adjustably sliding on plate 41", a fulcrum wheel 43" rotatably formed on sliding block 42", a link 44" lowerly connected with block 42" and upperly pivotedly connected to seat tube S by a pivot 44"a, a restored spring 46" fixed on the upper fork to restore the controller 4" and a magnetic actuator 45" pivotedly fixed on the upper portion of link 44" and pressurized on wheel tire T as restored by spring 46". The driving rod is riding fulcrum wheel 43".

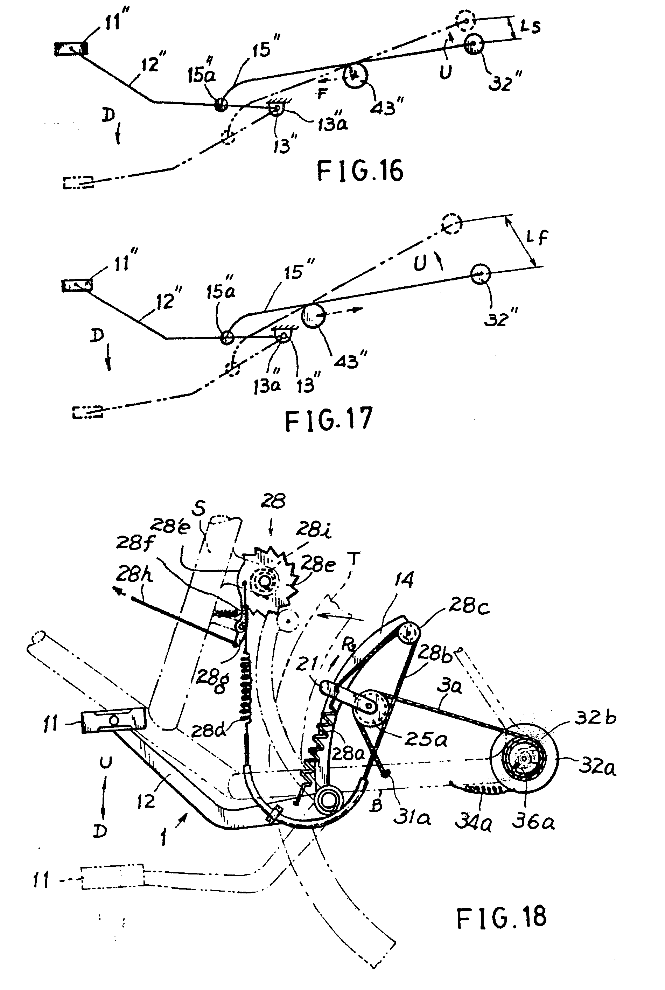

When adjusting the speed as shown in Figures 16 and 17, the depression (direction D) of pedal 11" in Figure 16 will get a smaller stroke Ls of driving chain (direction U), and, however, the depression in Figure 17 will obtain a greater stroke Lf by moving the fulcrum wheel 43" forwards (F). Hence, the speed in Figure 17 will be faster than that of Figure 16. It means that when the fulcrum wheel 43" is moved forwards to approach the front pivot 15", the greater chain stroke will be increased to have a faster speed.

Still further preferred embodiment of the present invention is shown in Figure 18 which is modified from the present invention as shown in Figure 1 to include an actuating means 1, a stroke adjusting means 2, a driving wire 3a and a speed controller 28. The original driving chain 3 is modified as a wire 3a of which one end 31a is fixed on the bottom fork B and the remaining wire portion is guided by an idler 25a pivoted on the sliding block 21 and then wound for several turns on the hub 32b of central wheel 32a which is tensioned by a restoring spring 34a secured to the bottom fork so that once depressing the pedal 11, the driving plate 14 will pull the wire 3a and rotate the wheel 32a as another wire end 36a is fixed on the wheel hub 32b. The original speed controller 4 is also modified as the speed controller 28 which includes a first restoring spring 28a securing the sliding block 21 to the pedal rod 12, a wire 28b having one end secured to the sliding block 21 and having the remaining wire guided by an idler 28c fixed atop on driving plate 14 and then secured to a ratchet wheel 28e through a second restoring spring 28d, a ratchet wheel 28e

resiliently locked by a catch 28f and pivotedly fixed on the seat tube S as restored by a coil spring 28i (dotted line shown), and a control wire 28h having one end fixed to a lever 28g for biasing the catch 28f and having another end extended to the driver's operating side (not shown) for releasing the ratchet wheel 28e.

When variating the speed of the present invention for faster running, each quick depression (D) of pedal 11 will allow the driving plate 14 striking the ratchet wheel 28e to rotate clockwise for a small radians so as to tension the wire 28b in which the tensioning energy is temporarily stored in the second restored spring 28d. When releasing the pedal 11 (U) the tensioning energy of spring 28d will pull the wire 28b to raise sliding block 21 for a little bit of higher speed variation. After hast and quick cycles of depression and releasing of actuating means 1, the sliding block 21 will be raised to the highest position stably since the ratchet wheel 28c has been rotated to the non-toothed portion 28'e on ratchet perimeter. The highest speed variation can thus be achieved. After pulling the control wire 28h, the catch 28f is unlocked to release the ratchet wheel 28e as restored by spring 28i so that the first restoring spring 28a will pull the sliding block 21 to its lowest position for normal running.

In Figure 1, the trapezoid hole 22 may be modified as other shapes and a lining or packing plate may be further provided to embed the hole 22 to prevent from wearing the arcuate plate 14.

Claims:

1. An automatic speed variating means for bicycle comprising:

an actuating means having a pedal, a pedal rod, a pivot, an arcuated plate extending from said pivot and forming an angle with said pedal rod and a lower rod connecting the stroke adjusting means;

a stroke adjusting means having a sliding block formed with a trapezoid hole, a side lug for inserting a link, a bracket, a chain wheel pivotedly fixed on said bracket, a link connected with a bottom striker having two extensions separated with an angle therebetween;

a driving chain having its one end fixed on the bottom fork of bicycle and having the remaining chain portion engaged with said chain wheel on said stroke adjusting means, a chain wheel formed on the center of bicycle wheel and a chain wheel secured to a restored spring connected to the bottom fork by a bracket, and having another end fixed on the bottom fork;

a speed controller having a lower bracket, a striker trimmer pivotedly fixed on said lower bracket, a central rod extending from said trimmer, a biasing link centrally pivotedly fixed on the bottom fork and formed as a lower hook to biase said central rod and said trimmer to adjust the riding position when said striker of stroke adjusting means backwards riding on said trimmer so as to adjust the position of said sliding block for speed variation; and a magnetic actuator having a rotor core and a stator collar, pivotedly fixed on the upper portion of said link and pressed on the bicycle wheel by a restored spring whereby said magnetic actuator operates by faster rotating said stator collar about said rotor core to exert a torque biasing said link to rotate said trimmer clockwise for backward riding of said striker and to raise said sliding block for faster speed variation.

2. An automatic speed variating means for bicycle comprising: an actuating means including a pedal, a pedal rod having a pivot pivotedly fixed in a bush fixed on a bottom fork of the bicycle and a driving rod extending from said pivot to form an angle with said pedal rod;

a speed adjusting means including an arcuate plate fixed between a seat tube and the bottom fork of a bicycle, a sliding block adjustably slidable along said arcuate plate, a controlling link centrally pivotedly fixed on an upper fork of a bicycle and lowerly connected with said sliding block and upperly formed with a handle, a first restoring spring means fixed to the upper fork of a bicycle to restore said speed adjusting means for normal bicycle running;

a driving chain having its one end fixed on said sliding block and having the chain portion engaged with a first chain wheel rotatably fixed atop said driving rod, a second chain wheel formed on the center of a bicycle wheel, a third chain wheel which is connected at one end with a second restoring spring means fixed on said pivot by a bracket, and said chain having its other end fixed on the bottom fork adjacent said center of the bicycle wheel; and

a magnetic actuator having a rotor core and a stator collar, pivotedly fixed on the upper portion of said controlling link and pressed on the bicycle wheel by said first restoring spring means whereby said magnetic actuator operates by rotating said stator collar about said rotor core to urge said rotor core to rotate in the same direction as the faster rotating stator collar to thereby exert a torque biasing said controlling link to lower said sliding block along said arcuate plate and thereby increase the stroke of said driving chain for automatic speed variation.

3. An automatic speed variating means for a bicycle comprising: an actuating means including a pedal, a pedal rod having a rear pivot pivotedly fixed on a bottom fork of said bicycle and a driving rod pivotedly formed on said pedal rod by a front pivot positioned beyond said rear pivot;

a driving chain having its one end fixed on the bottom fork and having the remaining chain portion engaged with a first chain wheel rotatably fixed atop said driving rod, a second chain wheel formed on the center of a bicycle wheel, a third chain wheel which is connected with a first restoring spring means fixed onto the front pivot by a bracket and said driving chain having its other end fixed onto the bottom fork adjacent said center of the bicycle wheel;

a speed controller having a fulcrum adjusting plate fixed on the bottom fork, a sliding block slidingly adjustable on said fulcrum adjusting plate, a fulcrum wheel rotatably mounted on said sliding block, a link connected at a lower end to said sliding block and pivotedly connected at an upper end to a seat tube, and a second restoring spring means fixed on an upper fork to restore said speed controller for normal bicycle running, said driving rod of said actuating means being pivoted on said fulcrum wheel and said fulcrum wheel being movably by sliding said sliding block along said adjusting plate; and a magnetic actuator having a rotor core and a stator collar, said magnetic actuator pivotedly fixed on the upper portion of said link and pressed on the bicycle wheel by said second restoring spring means, whereby said magnetic actuator operates by rotating said stator collar to thereby exert a torque to bias said link to move said fulcrum wheel forward to increase the chain stroke for faster speed variation.

4. An automatic speed variating means according to Claim 1, wherin said driving chain is modified as a driving wire having one end secured to the bottom fork and having the remaining wire guided by an idler pivoted on said sliding block and then wound on the hub of a central wheel tensioned by a restored spring and said speed controller is modified to include: a first restoring spring securing the sliding block to the pedal rod, a wire having one end secured to said sliding block and having the remaining wire guided by an idler fixed atop on the driving plate and then secured to a ratchet wheel through a second restored spring, a ratchet wheel resiliently locked by a catch and

0201639

pivotedly fixed on the seat tube as restored by a coil spring and a control wire having one end fixed to a catch and having another end extended to the driver's operating side for releasing the ratchet wheel, whereby said driving plate will strike said ratchet wheel for stepwise clockwise rotation to tension the wire to raise said sliding block for higher speed variation and said ratchet wheel will be released to restore said sliding block for its normal running.

1/10

FIG.1

0201639

2/10

FIG. 2

FIG. 3

FIG.4

FIG.5

0201639

3/10

FIG.6

FIG.7

FIG. 8

FIG.9

FIG.10

FIG.11

FIG.12

FIG.13

0201639

FIG.14

FIG.15

FIG.16

FIG.17

FIG.18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 465 633 (CHARRIER) <br> * Claims 1,5,6; figures 1,2 * | 1 | B 62 M 1/04 |
| A | DE-C- 103 792 (ROXENDORFF) | | |
| A | DE-C- 92 497 (FUESS) | | |
| E | US-A-4 549 874 (WEN) <br> * Whole document * | 2,3 | |

TECHNICAL FIELDS SEARCHED (Int. Cl.4)

B 62 M

The present search report has been drawn up for all claims

| Place of search | Date of completion of the search | Examiner |
|---|---|---|
| THE HAGUE | 14-03-1986 | DUBOIS B.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82